(19) Europäisches Patentamt
European Patent Office
Office européen des brevets

(11) **EP 3 413 996 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **17702141.7**

(22) Anmeldetag: **02.02.2017**

(51) Int Cl.:
*C10L 3/10* (2006.01)    *B01D 53/14* (2006.01)

(86) Internationale Anmeldenummer:
**PCT/EP2017/052304**

(87) Internationale Veröffentlichungsnummer:
**WO 2017/137309 (17.08.2017 Gazette 2017/33)**

(54) **VERFAHREN ZUR ABTRENNUNG VON C5-C8-KOHLENWASSERSTOFFEN UND SAUERGASEN AUS EINEM FLUIDSTROM**

METHOD FOR SEPARATING C5-C8 HYDROCARBONS AND ACID GASES FROM A FLUID STREAM

PROCÉDÉ DE SÉPARATION D'HYDROCARBURES C5-C8 ET DE GAZ ACIDES D'UN COURANT DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2016 EP 16154722**
**08.04.2016 EP 16164431**

(43) Veröffentlichungstag der Anmeldung:
**19.12.2018 Patentblatt 2018/51**

(60) Teilanmeldung:
**19204497.2**

(73) Patentinhaber: **BASF SE**
**67056 Ludwigshafen (DE)**

(72) Erfinder:
• KATZ, Torsten
  67434 Neustadt (DE)
• NOTZ, Ralf
  67133 Maxdorf (DE)
• KERN, Andreas
  Hong Kong (CN)

(74) Vertreter: **BASF IP Association**
**BASF SE**
**G-FLP-C6**
**67056 Ludwigshafen (DE)**

(56) Entgegenhaltungen:
WO-A1-2015/173263    US-A- 4 184 855
US-A1- 2002 007 733    US-A1- 2002 012 622
US-A1- 2009 199 709    US-A1- 2010 104 490
US-A1- 2014 065 040

**Beschreibung**

Die vorliegende Erfindung betrifft ein Verfahren zur Abtrennung von $C_5$-$C_8$-Kohlenwasserstoffen und Sauergasen aus einem Fluidstrom.

Zahlreiche Fluidströme enthalten Sauergase, wie z.B. $CO_2$, $H_2S$, $SO_2$, $CS_2$, HCN, COS oder Merkaptane. Bei diesen Fluidströmen kann es sich beispielsweise um Gasströme wie Erdgas, Raffineriegas, oder Synthesegas handeln. Die Entfernung der sauren Gase aus diesen Fluidströmen ist aus verschiedenen Gründen wünschenswert.

Der Gehalt an sauren Gasen in Erdgas wird durch geeignete Aufbereitungsmaßnahmen unmittelbar an der Erdgasquelle reduziert, denn diese bilden in dem vom Erdgas häufig mitgeführten Wasser Säuren, die korrosiv wirken.

Synthesegas besteht im Wesentlichen aus Kohlenmonoxid und Wasserstoff. Synthesegas wird im Allgemeinen durch Partialoxidation oder Steamreforming von Kohlenwasserstoffen hergestellt. Das rohe Synthesegas enthält saure Gase wie Kohlendioxid, Schwefelwasserstoff oder Carbonylsulfid, die entfernt werden müssen.

Im industriellen Maßstab werden zur Entfernung von Sauergasen, wie Kohlendioxid, aus Fluidströmen häufig wässrige Lösungen organischer Basen, z. B. Amine wie insbesondere Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Häufig werden vom Absorptionsmittel neben den Sauergasen auch andere im Fluidstrom enthaltene nicht-saure niedrigsiedende Verbindungen aufgenommen, wie beispielsweise Methan oder Ethan. In den als Absorptionsmittel eingesetzten wässrigen Aminlösungen werden sie weniger stark gebunden als Sauergase, denn sie bilden mit Aminen keine ionischen Produkte. Üblicherweise werden nicht-saure niedrigsiedende Verbindungen wie Methan oder Ethan in einer dem Regenerator vorgelagerten Entspannungsstufe gezielt desorbiert.

Einige Fluidströme enthalten auch höhersiedende Kohlenwasserstoffe, insbesondere $C_5$-$C_8$-Kohlenwasserstoffe, einschließlich Benzol, Toluol, Ethylbenzol und Xylolen (BTEX). Auch diese können zumindest teilweise in das Absorptionsmittel aufgenommen werden. In einer herkömmlichen, dem Regenerator vorgelagerten Entspannungsstufe werden sie wegen der im Vergleich zu Methan oder Ethan höheren Siedetemperaturen nicht oder nur zu einem geringen Teil desorbiert. Ein beträchtlicher Teil der $C_5$-$C_8$-Kohlenwasserstoffe tritt erst bei der im Regenerator erfolgenden Desorption der Sauergase aus dem Absorptionsmittel aus. So geht zumindest ein Teil der höhersiedenden Kohlenwasserstoffe mit Siedetemperatur oberhalb des Ethans über den austretenden Sauergasstrom verloren oder es entsteht ein zusätzlicher Aufwand für deren Rückgewinnung. Ein Teil dieser höhersiedenden Kohlenwasserstoffe ist stark gesundheitsschädlich; dies gilt insbesondere für Benzol und andere aromatische Kohlenwasserstoffe, wie Toluol, Ethylbenzol oder Xylol. Die Belastung des Sauergasstroms mit diesen Kohlenwasserstoffen ist so gering wie möglich zu halten. Die $C_5$-$C_8$-Kohlenwasserstoffe führen im Regenerationsschritt zu unerwünschter Schaumbildung. BTEX-Kohlenwasserstoffe wirken als Lösungsvermittler für höhere Kohlenwasserstoffe und verschärfen die Schaumproblematik.

In der Vergangenheit wurde versucht, in das Absorptionsmittel aufgenommene $C_5$-$C_8$-Kohlenwasserstoffe getrennt von den Sauergasen zu desorbieren, etwa in der US 6,607,585 B2. Dort wird ein Gaswäscheverfahren beschrieben, bei dem man den Gehalt von Benzol, Toluol, Ethylbenzol und Xylolen (BTEX) und von leichtflüchtigen aliphatischen Kohlenwasserstoffen (VOC) im abgetrennten Sauergas verringert. Dies wird erreicht, indem man diese Kohlenwasserstoffe aus der mit $CO_2$ und $H_2S$ beladenen wässrigen Aminlösung vor deren Einleitung in den Regenerator in einem BTEX-Stripper ausstrippt und verbrennt.

Das Verfahren der US 6,607,585 B2 hat Nachteile. Zunächst ist ein zusätzlicher Stripper erforderlich, der zur Abtrennung der BTEX und VOC dient. Außerdem wird zum Ausstrippen von BTEX und VOC ein Teil des am Kopf des Absorbers bzw. der nachgelagerten Wascheinheit erhaltenen Wertprodukts (entsäuertes Erdgas) in den BTEX-Stripper geleitet. Zudem wird ein Teil der aus dem Regenerator erhaltenen regenerierten Aminlösung in den BTEX-Stripper geführt, um die Rückwaschung mit ausgestripptem Sauergas zu gewährleisten. Um den BTEX- und VOC-Gehalt im Sauergas zu verringern werden also ein zusätzlicher Stripper und zwei zusätzliche Ströme sowie die hierfür erforderlichen Leitungen etc. benötigt. Insofern verursacht die Abtrennung von BTEX im Verfahren der US 6,607,585 B2 einen erheblichen Mehraufwand.

Die US 2002/0012622 A1 beschreibt ein Verfahren zum Entfernen von VOC aus einem für die Entsäuerung von sauergashaltigen Gasströmen verwendeten Amin enthaltenden Absorptionsmittel. Hierbei wird das beladene Absorptionsmittel in einen Entspannungsbehälter geführt. Der Entspannungsbehälter wird gezielt so betrieben, dass darin zwar VOC freigesetzt werden, jedoch nur möglichst wenig $CO_2$. So beträgt der Druck im Entspannungsbehälter beispielsweise 4,5 bar (64,7 psia) und die Temperatur 87,2 °C (189 °F).

Bullin und Brown beschreiben im Berichtsband zur 83. Gas Processors Association Annual Convention (14.-17. März 2004) unter "Hydrocarbons and BTEX Pickup and Control from Amine Systems" die Simulation eines Verfahren in dem beladenes 50% Methyldiethanolamin zunächst durch einen "Rich Flash", dann durch einen Wärmetauscher und daraufhin durch einen "Hot Flash" geführt wird. In dem Wärmetauscher wird Wärme vom regenerierten Absorptionsmittel auf das beladene Absorptionsmittel übertragen. Der "Hot Flash" wird offenbar bei niedrigem Druck betrieben, da Benzol aus dem Absorptionsmittel schon ab 65,6 °C (150 °F) freigesetzt wird. Außerdem sei der "Hot Flash" für die Abtrennung von BTEX nicht effizient einsetzbar, da darin neben Benzol auch große Mengen $CO_2$ freigesetzt werden. Eine ähnliche Simulation beschreiben Mcintyre et al. im Berichtsband zur 80. Gas Processors Association Annual Convention (12.- 14. März 2001) unter "Recent GPA Data Improves BTEX Predictions for Amine Sweetening Facilities".

Die WO 2014/199036 lehrt, eine mit $CO_2$ beladene Absorptionslösung - nach optionaler Entspannung in einen Mitteldruck-Entspannungsbehälter - leicht zu erwärmen und dann in einen Niederdruck-Entspannungsbehälter zu entspannen, so dass eine gasförmige kohlenwasserstoffhaltige Fraktion (u.a. BTEX) freigesetzt und eine kohlenwasserstoffabgereicherte Absorptionslösung erhalten wird. Als Vorrichtung zum Erwärmen dient beispielswiese ein Wärmetauscher mit einem heißen Betriebsmedium. Der Niederdruck-Entspannungsbehälter wird z.B. bei 1,5 bar betrieben.

Ein Nachteil des Verfahrens der WO 2014/199036 besteht darin, dass die freigesetzten Kohlenwasserstoffe bei einem niedrigen Druck anfallen und nicht ohne weiteres in eine Brenngasanlage (Fuel Gas System) eingespeist werden können. Die freigesetzten Kohlenwasserstoffe sind einer sinnvollen Verwertung schwer zugänglich; sie werden unter Zufuhr von Brennstoffen verbrannt. Außerdem ist für eine hinreichende Abtrennung von BTEX ein beträchtlicher konstruktiver und/oder energetischer Aufwand erforderlich. Wenn für das leichte Erwärmen der mit $CO_2$ beladenen Absorptionslösung möglichst wenig Energie zugeführt werden soll, ist für die hinreichende Freisetzung von BTEX ein großer Niederdruck-Entspannungsbehälter mit hoher Trennstufenzahl erforderlich. Nur dann kann bei geringer Wärmezufuhr ein ausreichend großer Teil der im Absorptionsmittel enthaltenen BTEX freigesetzt werden. Versucht man hingegen den konstruktiven Aufwand durch Verwendung eines kleineren Niederdruck-Entspannungsbehälters so gering wie möglich zu halten, so wird eine ausreichende Trennleistung nur auf Kosten der Energiebilanz ermöglicht. Denn dann muss das beladene Absorptionsmittel mit einer höheren Temperatur in den Niederdruck-Entspannungsbehälter geführt werden. Dies erfordert wiederum ein stärkeres Erwärmen der mit $CO_2$ beladenen Absorptionslösung.

Dokument WO2015/173263 A1 offenbart ein Verfahren zur Abtrennung von Kohlenwasserstoffen und Sauergasen aus einem Fluidstrom.

Die Aufgabe der vorliegenden Erfindung besteht in der Bereitstellung eines Verfahrens zur Abtrennung von Sauergasen aus einem $C_5$-$C_8$-Kohlenwasserstoffe enthaltenden Fluidstrom, bei dem die $C_5$-$C_8$-Kohlenwasserstoffe mit minimalem konstruktivem und energetischem Aufwand in einer leicht verwertbaren Form getrennt von den Sauergasen anfallen.

Diese Aufgabe wurde gelöst durch ein Verfahren zur Abtrennung von $C_5$-$C_8$-Kohlenwasserstoffen und Sauergasen aus einem Fluidstrom, wobei man

a) den Fluidstrom in einer Absorptionszone mit einem Absorptionsmittel in Kontakt bringt, das mindestens ein Amin enthält, wobei man einen entsäuerten Fluidstrom und ein mit Sauergasen beladenes Absorptionsmittel erhält,

b) das beladene Absorptionsmittel in einem ersten Wärmetauscher erwärmt und in eine Dekompressionszone auf einen Druck von 5 bis 10 bar entspannt, wobei man eine $C_5$-$C_8$-Kohlenwasserstoffe enthaltende Gasphase und ein Kohlenwasserstoff-abgereichertes beladenes Absorptionsmittel erhält,

c) das Kohlenwasserstoff-abgereicherte beladene Absorptionsmittel in einen Stripper leitet, in dem die Sauergase bei einem Druck von 1 bis 2,5 bar durch Zufuhr von Wärme zumindest teilweise freigesetzt werden, wobei man ein regeneriertes Absorptionsmittel und einen Sauergas enthaltenden Strom erhält, wobei man das Kohlenwasserstoffabgereicherte beladene Absorptionsmittel gegebenenfalls vor dem Einleiten in den Stripper in einem zweiten Wärmetauscher erwärmt, und

d) das regenerierte Absorptionsmittel in die Absorptionszone zurückführt,

wobei man, wenn der zweite Wärmetauscher vorhanden ist, als Heizmedium im zweiten Wärmetauscher das regenerierte Absorptionsmittel verwendet und als Heizmedium im ersten Wärmetauscher das regenerierte Absorptionsmittel nach dem Passieren des zweiten Wärmetauschers verwendet, oder, wenn der zweite Wärmetauscher nicht vorhanden ist, als Heizmedium im ersten Wärmetauscher das regenerierte Absorptionsmittel verwendet, und wobei man im ersten Wärmetauscher so viel Wärme überträgt, dass die $C_5$-$C_8$-Kohlenwasserstoffe enthaltende Gasphase 50 bis 97 Vol.-% Sauergase, vorzugsweise 70 bis 95 Vol.-% Sauergase, z.B. 80 bis 95 Vol.-% Sauergase enthält.

Also verwendet man, wenn der zweite Wärmetauscher vorhanden ist, als Heizmedium im zweiten Wärmetauscher das regenerierte Absorptionsmittel und als Heizmedium im ersten Wärmetauscher das regenerierte Absorptionsmittel nach dem Passieren des zweiten Wärmetauschers. Dann gewichtet man die im ersten Wärmetauscher und im zweiten Wärmetauscher übertragenen relativen Wärmemengen so, dass die $C_5$-$C_8$-Kohlenwasserstoffe enthaltende Gasphase 50 bis 97 Vol.-% Sauergase, vorzugsweise 70 bis 95 Vol.-% Sauergase, z.B. 80 bis 95 Vol.-% Sauergase enthält.

Alternativ verwendet man, wenn der zweite Wärmetauscher nicht vorhanden ist, als Heizmedium im ersten Wärmetauscher das regenerierte Absorptionsmittel. Dann überträgt man im ersten Wärmetauscher so viel Wärme, dass die $C_5$-$C_8$-Kohlenwasserstoffe enthaltende Gasphase 50 bis 97 Vol.-% Sauergase, vorzugsweise 70 bis 95 Vol.-% Sauergase, z.B. 80 bis 95 Vol.-% Sauergase enthält.

Der Wärmetausch zwischen dem regenerierte Absorptionsmittel und dem beladenem Absorptionsmitteln findet in zwei Stufen in einem ersten Wärmetauscher und in einem zweiten Wärmetauscher statt oder in nur einer Stufe, wenn der zweite Wärmetauscher nicht vorhanden ist. Der erste Wärmetausch erfolgt vor dem Entspannen des beladenen Absorptionsmittels in die Dekompressionszone; der zweite Wärmetausch kommt in Betracht, um das Kohlenwasserstoff-abgereicherte beladene Absorptionsmittel nach Verlassen einer Desorptionszone, in der ein Teil der Sauergase durch weitere Entspannung freigesetzt wird, und vor dessen Eintritt in den Stripper zu erwärmen. Als Heizmedium im zweiten Wärmetauscher verwendet man das regenerierte Absorptionsmittel und als Heizmedium im ersten Wärmetauscher das regenerierte Absorptionsmittel nach dem Passieren des zweiten Wärmetauschers, wenn der zweite Wärmetauscher vorhanden ist. Ist dieser nicht vorhanden, so verwendet man als Heizmedium im ersten Wärmetauscher das regenerierte Absorptionsmittel. Hierdurch wird eine optimale Wärmeintegration des Verfahrens erreicht.

In bestimmten Ausführungsformen des Verfahrens würde man die im ersten Wärmetauscher und im zweiten Wärmetauscher übertragenen relativen Wärmemengen so gewichten, dass die weit überwiegende Wärmemenge im ersten Wärmetauscher übertragen wird. Im Grenzfall wird der zweite Wärmetauscher obsolet.

Man gewichtet die in den Wärmetauschern übertragenen relativen Wärmemengen so, dass die Gasphase in der Dekompressionszone, welche die $C_5$-$C_8$-Kohlenwasserstoffe enthält, einen relativ hohen Anteil an Sauergasen aufweist. Wenn der zweite Wärmetauscher nicht vorhanden ist, überträgt man im ersten Wärmetausche so viel Wärme, dass die Gasphase in der Dekompressionszone, welche die $C_5$-$C_8$-Kohlenwasserstoffe enthält, einen relativ hohen Anteil an Sauergasen aufweist. Der relativ hohe Anteil an Sauergasen wird gezielt in Kauf genommen, da hierdurch die $C_5$-$C_8$-Kohlenwasserstoffe in der Gasphase verdünnt werden und deren Partialdruck vermindert wird. Dies verschiebt das Verteilungsgleichgewicht der $C_5$-$C_8$-Kohlenwasserstoffe in Richtung der Gasphase, was wiederum den Übergang weiterer $C_5$-$C_8$-Kohlenwasserstoffe in die Gasphase begünstigt.

Im erfindungsgemäßen Verfahren fallen die $C_5$-$C_8$-Kohlenwasserstoffe mit minimalem konstruktivem Aufwand an. Der für die Abtrennung von BTEX im Verfahren der US 6,607,585 B2 erforderliche Mehraufwand wird vermieden. Insbesondere wird zur Freisetzung der $C_5$-$C_8$-Kohlenwasserstoffe weder Wertprodukt (entsäuertes Erdgas), noch aus dem Regenerator bzw. der Desorptionszone erhaltene regenerierte Aminlösung benötigt.

Die $C_5$-$C_8$-Kohlenwasserstoffe fallen mit minimalem energetischem Aufwand an. Im Gegensatz zur WO 2014/199036 wird externe Wärme dem Absorptionsmittel nur im Stripper zugeführt, wohingegen die für die Freisetzung in der Dekompressionszone erforderliche Wärme ausschließlich durch (internen) Wärmetausch bereitgestellt wird.

Die $C_5$-$C_8$-Kohlenwasserstoffe fallen in einer leicht verwertbaren Form an. Da die $C_5$-$C_8$-Kohlenwasserstoffe enthaltende Gasphase bei einem Druck von 5 bis 10 bar erhalten wird, muss kein zusätzlicher Kompressionsaufwand betrieben werden, um sie der Brenngasanlage zuzuführen. Eine Brenngasanlage wird normalerweise bei einem Druck von wenigstens 5 bar betrieben.

Man bringt den Fluidstrom in einer Absorptionszone mit einem Absorptionsmittel, das mindestens ein Amin enthält, in Kontakt. Vorzugsweise bringt man den Fluidstrom in der Absorptionszone mit dem Absorptionsmittel bei einem Druck von 30 bis 120 bar, insbesondere von 50 bis 80 bar, in Kontakt. Dabei erhält man einen zumindest teilweise entsäuerten Fluidstrom (vorliegend als entsäuerter Fluidstrom bezeichnet) und ein mit Sauergasen beladenes Absorptionsmittel.

Die Behandlung des Fluidstroms mit dem Absorptionsmittel erfolgt vorzugsweise im Gegenstrom. Der Fluidstrom wird dabei im Allgemeinen in einen unteren Bereich und das Absorptionsmittel in einen oberen Bereich der Absorptionszone eingespeist. Das Absorptionsmittel kann oberhalb der Absorptionszone durch geeignete Flüssigkeitsverteiler über den Querschnitt der Absorptionszone verteilt werden. Zur Verbesserung des Kontakts und Schaffung einer großen Stoffaustauschgrenzfläche enthält die Absorptionszone in der Regel Einbauten, z. B. Füllkörper, Packungen und/oder Böden. Die Behandlung des Fluidstroms mit dem Absorptionsmittel erfolgt geeigneterweise in einem Absorptionsturm bzw. Absorptionskolonne, z. B. einer Füllkörper-, Packungs- oder Bodenkolonne. Als Absorptionszone wird die Sektion einer Absorptionskolonne angesehen, in der der Fluidstrom in Stoffaustausch-Kontakt mit dem Absorptionsmittel kommt.

Die Temperatur des in die Absorptionszone eingeführten Absorptionsmittels beträgt im Allgemeinen etwa 20 bis 60 °C.

Der entsäuerte Fluidstrom kann mit einer wässrigen Flüssigkeit in Kontakt gebracht werden. Dies kann zum Auswaschen von mitgeführten Absorptionsmittelbestandteilen dienen und/oder zum Ausgleich der Wasserbilanz des Verfahrens, wenn über die austretenden Ströme mehr Wasser ausgetragen wird, als über die eintretenden Ströme eingetragen wird.

Es kann sich bei der wässrigen Flüssigkeit um intrinsische Flüssigkeiten, d. h. wässrige Flüssigkeiten, die an anderer Stelle des Verfahrens anfallen, oder um von außen zugeführte wässrige Flüssigkeiten handeln. Vorzugsweise umfasst die wässrige Flüssigkeit ein bei einer stromabwärts erfolgenden Kühlung des entsäuerten Fluidstroms gebildetes

4

Kondensat (sogenanntes Absorberkopfkondensat) oder ein bei der Kühlung des Sauergas enthaltenden Stroms gebildetes Kondensat (sogenanntes Sauergaskondensat) und/oder Frischwasser.

Man kann die wässrige Flüssigkeit z. B. in einen oberen Bereich der Absorptionszone einspeisen.

Alternativ kann man die wässrige Flüssigkeit in eine optionale Waschzone einspeisen. In der Waschzone wird dem entsäuerten Fluidstrom die Waschflüssigkeit im Gegenstrom entgegengeführt. Vorzugsweise weist die Waschzone Füllkörper, Packungen und/oder Böden auf, um den Kontakt des Fluidstrom mit der Waschflüssigkeit zu intensivieren. Die Waschflüssigkeit kann oberhalb der Waschzone durch geeignete Flüssigkeitsverteiler über den Querschnitt der Waschzone verteilt werden.

Die Waschzone kann als oberhalb der Absorptionszone angeordnete Sektion einer Absorptionskolonne ausgebildet sein. Die Waschzone ist dazu ein als Rückwaschsektion oder Verstärkungsteil ausgebildeter Abschnitt der Absorptionskolonne oberhalb der Einspeisung des Absorptionsmittels.

Man kann die Waschflüssigkeit über die Waschzone recyclieren. Die Waschflüssigkeit wird hierzu unterhalb der Waschzone, z. B. mittels eines geeigneten Sammelbodens, gesammelt und über eine Pumpe zum oberen Ende der Waschzone gepumpt. Man kann die recyclierte Waschflüssigkeit kühlen, vorzugsweise auf eine Temperatur von 20 bis 70 °C, insbesondere 30 bis 60 °C. Hierzu wird die Waschflüssigkeit zweckmäßigerweise über einen Kühler umgepumpt. Um eine Akkumulation ausgewaschener Absorptionsmittelbestandteile in der Waschflüssigkeit zu vermeiden, wird ein Teilstrom der Waschflüssigkeit aus der Waschzone ausgeleitet.

Man erwärmt das beladene Absorptionsmittel in einem ersten Wärmetauscher. In dem Wärmetauscher wird das beladene Absorptionsmittel durch indirekten Wärmetausch erwärmt. Im erfindungsgemäßen Verfahren kann jede zur Übertragung von Wärme von einer Flüssigkeit auf eine andere Flüssigkeit geeignete Form von indirektem Wärmetauscher als erster Wärmtauscher eingesetzt werden. Man erwärmt das beladene Absorptionsmittel in dem ersten Wärmetauscher z. B. auf eine Temperatur im Bereich von 85 bis 105 °C.

Man kann das mit Sauergasen beladene Absorptionsmittel schon vor oder bei dem Eintritt in den ersten Wärmetauscher teilweise entspannen. Dies hat den Vorteil, dass der Wärmetauscher nicht so ausgelegt werden muss, dass er dem hohen Druck standhält, bei dem das mit Sauergasen beladene Absorptionsmittel in der Absorptionszone gebildet wird. Vorzugsweise entspannt man das mit Sauergasen beladene Absorptionsmittel höchstens so weit, dass es bis zum Eintritt in die Dekompressionszone nicht aktiv gefördert, wie z.B. gepumpt, werden muss.

Das im ersten Wärmetauscher erwärmte beladene Absorptionsmittel entspannt man in eine Dekompressionszone auf einen Druck von 5 bis 10 bar, vorzugsweise auf einen Druck von > 6 bis 10 bar.

Die Dekompressionszone kann z. B. in einen Entspannungsbehälter integriert sein, in den man das beladene Absorptionsmittel entspannt.

Bei der Entspannung des im ersten Wärmetauscher erwärmten beladenen Absorptionsmittels erhält man eine $C_5$-$C_8$-Kohlenwasserstoffe enthaltende Gasphase und ein Kohlenwasserstoff-abgereichertes beladenes Absorptionsmittel. Coabsorbierte Bestandteile des Fluidstroms, wie Inertgase, Sauerstoff und/oder Kohlenwasserstoffe, wie insbesondere $C_5$-$C_8$-Kohlenwasserstoffe werden freigesetzt. Es wird auch ein geringer Teil der Sauergase freigesetzt; die $C_5$-$C_8$-Kohlenwasserstoffe enthaltende Gasphase enthält 50 bis 97 Vol.-% Sauergase. Jedoch wird die Hauptmenge der Sauergase nicht in der Dekompressionszone freigesetzt.

Die $C_5$-$C_8$-Kohlenwasserstoffe enthaltende Gasphase entweicht aus der Dekompressionszone nach oben. Vorzugsweise entnimmt man die $C_5$-$C_8$-Kohlenwasserstoffe enthaltende Gasphase über eine oben am Entspannungsbehälter angebrachte Leitung.

Das Kohlenwasserstoff-abgereicherte beladene Absorptionsmittel fließt aus der Dekompressionszone nach unten ab. Vorzugsweise leitet man es über eine unten am Entspannungsbehälter angebrachte Leitung aus.

Das erhaltene Kohlenwasserstoff-abgereicherte beladene Absorptionsmittel führt man beispielsweise direkt dem optionalen zweiten Wärmetauscher zu oder entspannt es zunächst weiter.

In einer bevorzugten Ausführungsform umfasst die Regeneration des Kohlenwasserstoff-abgereicherten beladenen Absorptionsmittels einen Entspannungsschritt, in dem ein Teil der Sauergase durch weitere Entspannung freigesetzt wird, eine Zwischenerwärmung im zweiten Wärmetauscher und die vollständige Regeneration im Stripper. Hierzu entspannt man das Kohlenwasserstoff-abgereicherte beladene Absorptionsmittel vor dem Erwärmen in dem zweiten Wärmetauscher in eine Desorptionszone auf einen Druck von 1 bis 2,5 bar und wärmt es darin durch direkten Wärmetausch mit dem Sauergas enthaltenden Strom vor.

Die Desorptionszone kann z. B. in einen Niederdruck-Entspannungsbehälter integriert sein, in den man das Kohlenwasserstoff-abgereicherte beladene Absorptionsmittel entspannt. Vorzugsweise leitet man den Sauergas enthaltenden Strom unterhalb der Desorptionszone und das Kohlenwasserstoff-abgereicherte beladene Absorptionsmittel oberhalb der Desorptionszone in den Niederdruck-Entspannungsbehälter ein.

Die Desorptionszone kann auch in den Stripper integriert sein.

Diese bevorzugte Ausführungsform bietet den Vorteil einer zusätzlichen überraschenden Verringerung des Energieverbrauchs, der durch die nachfolgenden Beispiele belegt ist.

Man erwärmt das Kohlenwasserstoff-abgereicherte beladene Absorptionsmittel in einem zweiten Wärmetauscher. In dem Wärmetauscher wird das beladene Absorptionsmittel durch indirekten Wärmetausch erwärmt. Im erfindungsgemäßen Verfahren kann jede zur Übertragung von Wärme von einer Flüssigkeit auf eine andere Flüssigkeit geeignete Form von indirektem Wärmetauscher als zweiter Wärmtauscher eingesetzt werden.

Das im zweiten Wärmetauscher erwärmte Kohlenwasserstoff-abgereicherte beladene Absorptionsmittel leitet man in einen Stripper.

Ist kein zweiter Wärmetauscher vorhanden, kann man das in der Dekompressionszone erhaltene Kohlenwasserstoff-abgereicherte beladene Absorptionsmittel direkt in den Stripper leiten.

In dem Stripper werden die Sauergase bei einem Druck von 1 bis 2,5 bar durch Zufuhr von Wärme zumindest teilweise freigesetzt. Dabei erhält man ein regeneriertes Absorptionsmittel, das in die Absorptionszone zurückgeführt wird, und einen Sauergas enthaltenden Strom.

Im Allgemeinen setzt man die Sauergase frei, indem man das Kohlenwasserstoff-abgereicherte beladene Absorptionsmittel auf 100 bis 150 °C, z. B. 100 bis 140 °C, insbesondere 105 bis 135 °C erwärmt. Hierzu kann man im unteren Teil des Strippers das entspannte Absorptionsmittel über einen Verdampfer erwärmen und partiell verdampfen.

Der Verdampfer ist vorzugsweise außerhalb des Strippers angeordnet. Man führt Absorptionsmittel aus dem Sumpf in den Verdampfer und führt zumindest den im Verdampfer gebildeten Dampf in den Stripper zurück.

Der Sumpf des Strippers kann mit einem Boden in ein oberes und ein unteres Sumpfkompartiment unterteilt sein. In einer Ausführungsform führt man sich auf dem Boden sammelndes Absorptionsmittel in den außerhalb des Strippers angeordneten Verdampfer und führt den im Verdampfer gebildeten Dampf und das im Verdampfer erhitzte flüssige Absorptionsmittel in das untere Sumpfkompartiment.

Der Stripper weist im Allgemeinen eine oberhalb des Sumpfs angeordnete Regenerationszone auf. Man leitet das erwärmte Kohlenwasserstoff-abgereicherte beladene Absorptionsmittel vorzugsweise oberhalb der Regenerationszone in den Stripper ein. Dem durch die Regenerationszone nach unten strömenden Absorptionsmittel wird in der Regenerationszone der im Verdampfer erzeugte Dampf entgegengeführt. Zweckmäßigerweise leitet man das regenerierte Absorptionsmittel aus dem Sumpf des Strippers aus.

Ist ein zweiter Wärmetauscher vorhanden, wärmt man, wie oben dargelegt, in einer bevorzugten Ausführungsform des erfindungsgemäßen Verfahrens mit dem Sauergas enthaltenden Strom das in die Desorptionszone entspannte Kohlenwasserstoff-abgereicherte beladene Absorptionsmittel vor. Hierzu kann man den aus der Regenerationszone nach oben austretenden Sauergas enthaltenden Strom in die Desorptionszone führen.

Dies kann man auf unterschiedliche Weise erreichen. Beispielsweise kann die Desorptionszone oberhalb der Regenerationszone im Stripper angeordnet sein, wobei der aus der Regenerationszone nach oben ausströmenden Sauergas enthaltende Strom direkt von unten in die Desorptionszone eintritt. Im allgemeinen führt man dann das aus der Desorptionszone nach unten austretende Absorptionsmittel über den zweiten Wärmetauscher in die Regenerationszone. Beispielsweise sammelt man das aus der Desorptionszone nach unten austretende Absorptionsmittel auf einem Sammelboden und leitet es von dem Sammelboden aus dem Stripper aus, durch den zweiten Wärmetauscher hindurch und anschließend unterhalb des Sammelbodens in den Stripper zurück.

Die Desorptionszone kann auch in einen vom Stripper räumlich getrennten Niederdruck-Entspannungsbehälter integriert sein, wobei man den Sauergas enthaltenden Strom am Kopf des Strippers ausleitet und unterhalb der Desorptionszone in den Niederdruck-Entspannungsbehälter einleitet.

Der Sauergas enthaltende Strom kann nach Verlassen der Regenerationszone, bzw. nach Verlassen der Desorptionszone, falls eine Desorptionszone vorgesehen ist, durch eine Verstärkungszone geführt werden. Beispielsweise ordnet man die Verstärkungszone bevorzugt oberhalb der Desorptionszone im Stripper an, wenn die Desorptionszone im Stripper angeordnet ist. Hingegen ordnet man die Verstärkungszone bevorzugt oberhalb der Desorptionszone im Niederdruck-Entspannungsbehälter an, wenn die Desorptionszone in den Niederdruck-Entspannungsbehälter integriert ist.

Die Verstärkungszone weist geeigneterweise eine strukturierte Packung, eine regellose Packung und/oder eine Mehrzahl von Böden auf.

Der Sauergas enthaltende Strom wird im Allgemeinen gekühlt, um eine wässrige Phase auszukondensieren, die vorliegend als Sauergaskondensat bezeichnet wird. Ist eine Desorptionszone vorhanden, so erfolgt die Kühlung vorzugsweise nachdem der Sauergase enthaltende Strom die Desorptionszone passiert hat. Ist eine Verstärkungszone vorhanden, so erfolgt die Kühlung vorzugsweise nachdem der Sauergas enthaltende Strom die Verstärkungszone passiert hat. Ist sowohl eine Desorptionszone, als auch eine Verstärkungszone vorhanden, so erfolgt die Kühlung vorzugsweise nachdem der Sauergase enthaltende Strom die beiden Zonen passiert hat. Das Sauergaskondensat kann zumindest teilweise als Rücklauf in die Verstärkungszone, die Desorptionszone oder die Regenerationszone zurückgeführt werden. Man kann das Sauergaskondensat auch zumindest teilweise in den Absorptionsmittelkreislauf einleiten, beispielsweise durch Einleiten in einen oberen Abschnitt der Absorptionszone, oder indem man Sauergaskondensat als die wässrige Flüssigkeit verwendet, mit der man den entsäuerten Fluidstrom in Kontakt bringt. Man kann auch einen Teil des Sauergaskondensats aus dem Verfahren ausleiten. Das Ausleiten kann z. B. mittels eines regelbaren Rücklaufteilers erfolgen.

Im zweiten Wärmetauscher verwendet man das regenerierte Absorptionsmittel als Heizmedium, wenn dieser vorhanden ist. Vorzugsweise führt man dann das aus dem Sumpf des Strippers ausgeleitete regenerierte Absorptionsmittel als Heizmedium direkt in den zweiten Wärmetauscher.

Im ersten Wärmetauscher verwendet man wiederum das nach dem Passieren des zweiten Wärmetauschers erhaltene regenerierte Absorptionsmittel als Heizmedium, wenn der zweite Wärmetauscher vorhanden ist. Hierzu führt man das vom zweiten Wärmetauscher abströmende regenerierte Absorptionsmittel vorzugsweise direkt in den ersten Wärmetauscher. Wenn der zweite Wärmetauscher nicht vorhanden ist, führt man das aus dem Stripper ausgeleitete regenerierte Absorptionsmittel in den ersten Wärmetauscher.

Erfindungsgemäß enthält die $C_5$-$C_8$-Kohlenwasserstoffe enthaltende Gasphase 50 bis 97 Vol.-% Sauergase. Hierzu überträgt man im ersten Wärmetauscher ausreichend Wärme bzw. gewichtet die im ersten Wärmetauscher und im zweiten Wärmetauscher übertragenen relativen Wärmemengen entsprechend.

Dem Fachmann ist klar, dass die Sauergase in dem aminhaltigen und somit basischen Absorptionsmittel ionisch und somit fester gebunden werden, als coabsorbierte Bestandteile, wie Inertgase, Sauerstoff und/oder Kohlenwasserstoffe. Wenn man im ersten Wärmetauscher also nur sehr wenig Wärme überträgt, so führt dies zu einer Unterschreitung der Untergrenze von 50 Vol.-% Sauergasen in der $C_5$-$C_8$-Kohlenwasserstoffe enthaltende Gasphase, da dann im Wesentlichen nur lose gebundene coabsorbierte Bestandteile, wie Inertgase, Sauerstoff und/oder Kohlenwasserstoffe, desorbiert werden. Überträgt man im ersten Wärmetauscher hingegen sehr viel Wärme, so führt dies zu einer Überschreitung der Obergrenze von 97 Vol.-% Sauergasen in der $C_5$-$C_8$-Kohlenwasserstoffe enthaltende Gasphase, da dann neben den lose gebundene coabsorbierten Bestandteilen, wie Inertgasen, Sauerstoff und/oder Kohlenwasserstoffen, auch große Mengen an Sauergasen desorbiert werden. Aufgrund dieses dem Fachmann bekannten Zusammenhangs zwischen der übertragenen Wärmemenge und dem Anteil an Sauergasen in der desorbierten Gasphase, ist es ohne weiteres möglich, die im ersten Wärmetauscher und gegebenenfalls im zweiten Wärmetauscher übertragenen Wärmemengen einzustellen.

Vorzugsweise enthält die $C_5$-$C_8$-Kohlenwasserstoffe enthaltende Gasphase 70 bis 95 Vol.-% Sauergase, z. B. 80 bis 95 Vol.-% Sauergase. Eine starke Verdünnung von mehr als 95 Vol.-% oder insbesondere mehr als 97 Vol.-% ist hingegen unerwünscht, da dies die Verwertbarkeit der $C_5$-$C_8$-Kohlenwasserstoffe enthaltende Gasphase einschränkt. Beispielsweise erschwert ein sehr hoher Anteil an Sauergasen den Betrieb der Brenngasanlage mit den in der Gasphase enthaltenden Kohlenwasserstoffen.

In einer Ausführungsform des erfindungsgemäßen Verfahrens kondensiert man die $C_5$-$C_8$-Kohlenwasserstoffe aus der $C_5$-$C_8$-Kohlenwasserstoffe enthaltenden Gasphase zumindest teilweise aus und führt die nicht-kondensierten Bestandteile in die Absorptionszone. Man kann die $C_5$-$C_8$-Kohlenwasserstoffe enthaltende Gasphase durch einen Kühler führen, in dem ein $C_5$-$C_8$-Kohlenwasserstoffe enthaltendes Kondensat gebildet wird. Das $C_5$-$C_8$-Kohlenwasserstoffe enthaltende Kondensat kann man in einem Phasentrenngefäß von den nicht-kondensierten Bestandteilen abtrennen und die nicht-kondensierten Bestandteile in die Absorptionszone führen.

Das Absorptionsmittel enthält mindestens ein Amin.

Bevorzugte Amine sind die Folgenden:

(i) Amine der Formel I:

$$NR^1(R^2)_2 \qquad \text{(I)}$$

worin $R^1$ unter $C_2$-$C_6$-Hydroxyalkylgruppen, $C_1$-$C_6$-Alkoxy-$C_2$-$C_6$-alkylgruppen, Hydroxy-$C_1$-$C_6$-Alkoxy-$C_2$-$C_6$-alkylgruppen und 1-Piperazinyl-$C_2$-$C_6$-alkylgruppen ausgewählt ist und $R^2$ unabhängig unter H, $C_1$-$C_6$-Alkylgruppen und $C_2$-$C_6$-Hydroxyalkylgruppen ausgewählt ist;

(ii) Amine der Formel II:

$$R^3R^4N\text{-}X\text{-}NR^5R^6 \qquad \text{(II)}$$

worin $R^3$, $R^4$, $R^5$ und $R^6$ unabhängig voneinander unter H, $C_1$-$C_6$-Alkylgruppen, $C_2$-$C_6$-Hydroxyalkylgruppen, $C_1$-$C_6$-Alkoxy-$C_2$-$C_6$-alkylgruppen und $C_2$-$C_6$-Aminoalkylgruppen ausgewählt sind und X für eine $C_2$-$C_6$-Alkylengruppe, -$X^1$-$NR^7$-$X^2$- oder -$X^1$-O-$X^2$- steht, worin $X^1$ und $X^2$ unabhängig voneinander für $C_2$-$C_6$-Alkylengruppen stehen und $R^7$ für H, eine $C_1$-$C_6$-Alkylgruppe, $C_2$-$C_6$-Hydroxyalkylgruppe oder $C_2$-$C_6$-Aminoalkylgruppe steht;

(iii) 5- bis 7-gliedrige gesättigte Heterocyclen mit wenigstens einem Stickstoffatom im Ring, die ein oder zwei weitere, unter Stickstoff und Sauerstoff ausgewählte Heteroatome im Ring enthalten können, und

(iv) Gemische davon.

Spezifische Beispiele sind:

(i) 2-Aminoethanol (Monoethanolamin), 2-(Methylamino)ethanol, 2-(Ethylamino)-ethanol, 2-(n-Butylamino)ethanol, 2-Amino-2-methylpropanol, N-(2-Aminoethyl)-piperazin, Methyldiethanolamin, Ethyldiethanolamin, Diemthylaminopropanol, t-Butylaminoethoxyethanol, 2-Amino-2-methylpropanol;

(ii) 3-Methylaminopropylamin, Ethylendiamin, Diethylentriamin, Triethylentetramin, 2,2-Dimethyl-1,3-diaminopropan, Hexamethylendiamin, 1,4-Diaminobutan, 3,3-Iminobispropylamin, Tris(2-aminoethyl)amin, Bis(3-dimethylamino-propyl)amin, Tetramethylhexamethylendiamin;

(iii) Piperazin, 2-Methylpiperazin, N-Methylpiperazin, 1-Hydroxyethyl-piperazin, 1,4-Bis-hydroxyethyl-piperazin, 4-Hydroxyethyl-piperidin, Homopiperazin, Piperidin, 2-Hydroxyethylpiperidin und Morpholin; und

(iv) Gemische davon.

In einer bevorzugten Ausführungsform enthält das Absorptionsmittel mindestens eines der Amine Monoethanolamin (MEA), Methylaminopropylamin (MAPA), Piperazin, Diethanolamin (DEA), Triethanolamin (TEA), Diethylethanolamin (DEEA), Diisopropylamin (DIPA), Aminoethoxyethanol (AEE), Dimethylaminopropanol (DIMAP) und Methyldiethanolamin (MDEA) oder Gemische davon.

Vorzugsweise ist das Amin ein sterisch gehindertes Amin oder ein tertiäres Amin. Ein sterisch gehindertes Amin ist ein sekundäres Amin, in dem der Amin-Stickstoff an mindestens ein sekundäres Kohlenstoffatom und/oder mindestens ein tertiäres Kohlenstoffatom gebunden ist; oder ein primäres Amin, in dem der Amin-Stickstoff an ein tertiäres Kohlenstoffatom gebunden ist. Ein bevorzugtes sterisch gehindertes Amin ist t-Butylaminoethoxyethanol. Ein bevorzugtes tertiäres Amin ist Methyldiethanolamin.

Wenn das Amin ein sterisch gehindertes Amin oder ein tertiäres Amin ist, enthält das Absorptionsmittel bevorzugt zudem einen Aktivator. Der Aktivator ist im Allgemeinen ein sterisch ungehindertes primäres oder sekundäres Amin. In diesen sterisch ungehinderten Aminen ist der Amin-Stickstoff mindestens einer Aminogruppe nur an primäre Kohlenstoffatome und Wasserstoffatome gebunden.

Das sterisch ungehinderte primäre oder sekundäre Amin ist beispielsweise ausgewählt unter Alkanolaminen, wie Monoethanolamin (MEA), Diethanolamin, (DEA), Ethylaminoethanol, 1-Amino-2-methyl-propan-2-ol, 2-Amino-1-butanol, 2-(2-Aminoethoxy)ethanol und 2-(2-Aminoethoxy)ethanamin,
Polyaminen, wie Hexamethylendiamin, 1,4-Diaminobutan, 1,3-Diaminopropan, 3-(Methylamino)propylamin (MAPA), N-(2-Hydroxyethyl)ethylendiamin, 3-(Dimethylamino)propylamin (DMAPA), 3-(Diethylamino)propylamin, N,N'-Bis(2-hydroxyethyl)ethylendiamin,
5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können, wie Piperazin, 2-Methylpiperazin, N-Methylpiperazin, N-Ethylpiperazin, N-(2-Hydroxyethyl)piperazin, N-(2-Aminoethyl)piperazin, Homopiperazin, Piperidin und Morpholin.

Besonders bevorzugt sind 5-, 6- oder 7-gliedrige gesättigte Heterocyclen mit wenigstens einer NH-Gruppe im Ring, die ein oder zwei weitere, unter Stickstoff und Sauerstoff ausgewählte Heteroatome im Ring enthalten können. Ganz besonders bevorzugt ist Piperazin.

In einer Ausführungsform enthält das Absorptionsmittel Methyldiethanolamin und Piperazin.

Das molare Verhältnis von Aktivator zu sterisch gehindertem Amin oder tertiärem Amin liegt bevorzugt im Bereich von 0,05 bis 1,0, besonders bevorzugt im Bereich von 0,05 bis 0,7.

Im Allgemeinen enthält das Absorptionsmittel 10 bis 60 Gew.-% Amin.

Das Absorptionsmittel ist vorzugsweise wässrig.

Das Absorptionsmittel kann zusätzlich noch ein physikalisches Lösungsmittel enthalten. Geeignete physikalische Lösungsmittel sind beispielsweise N-Methylpyrrolidon, Tetramethylensulfon, Methanol, Oligoethylenglykoldialkylether wie Oligoethylenglykolmethylisopropylether (SEPASOLV MPE), Oligoethylenglykoldimethylether (SELEXOL). Das physikalische Lösungsmittel ist im Absorptionsmittel im allgemeinen in Mengen von 1 bis 60 Gew.-%, vorzugsweise 10 bis 50 Gew.-%, insbesondere 20 bis 40 Gew.-%, enthalten.

Das Absorptionsmittel enthält in einer bevorzugten Ausführungsform weniger als 10 Gew.-%, z. B. weniger als 5 Gew.-%, insbesondere weniger als 2 Gew.-% anorganische basische Salze, wie z. B. Kaliumcarbonat.

Das Absorptionsmittel kann auch Additive, wie Korrosionsinhibitoren, Antioxidantien, Enzyme etc. enthalten. Im Allgemeinen liegt die Menge an derartigen Additiven im Bereich von etwa 0,01-3 Gew.-% des Absorptionsmittels.

Das erfindungsgemäße Verfahren ist für jeden Fluidstrom geeignet, der neben Sauergasen auch $C_5$-$C_8$-Koh-lenwasserstoffe enthält. Vorzugsweise ist der zugeführte Fluidstrom ausgewählt unter Fluidströmen, enthaltend 0,01 bis 30 Vol.-%, insbesondere 0,5 bis 10 Vol.-% Sauergase und 1 bis 50 000 ppmv, insbesondere 10 bis 5 000 ppmv

$C_5$-$C_8$-Kohlenwasserstoffe.

Die Sauergase können z. B. $CO_2$, $H_2S$, $SO_2$, $CS_2$, HCN, COS und Merkaptane umfassen.

Die Abtrennung von unter Benzol, Toluol, Ethylbenzol und Xylolen ausgewählten $C_5$-$C_8$-Kohlenwasserstoffe ist besonders wünschenswert, da insbesondere diese aromatischen Kohlenwasserstoffe mit Sauergasströmen, wie abgetrenntem $CO_2$, nur in begrenztem Umfang in die Atmosphäre entweichen dürfen oder aufwändige Nachbehandlungen der Sauergasströme, wie z. B. eine Verbrennung bei hoher Temperatur, zur BTEX-Entfernung erforderlich sind. Außerdem beeinträchtigen sie Katalysatoren, die für die Herstellung von Schwefel aus abgetrennten $H_2S$-haltigen Strömen verwendete werden. Deshalb umfassen die nach dem erfindungsgemäßen Verfahren abzutrennenden $C_5$-$C_8$-Kohlenwasserstoffe vorzugsweise aromatische Kohlenwasserstoffe, die unter Benzol, Toluol, Ethylbenzol und Xylolen ausgewählt sind.

Aus kohlenmonoxidhaltigen Fluidströmen lässt sich nach dem erfindungsgemäßen Verfahren mit oder an Stelle der $C_5$-$C_8$-Kohlenwasserstoffe enthaltenden Gasphase Kohlenmonoxid abtrennen. Das erfindungsgemäße Verfahren kann insofern auch zur Abtrennung von Kohlenmonoxid und Sauergasen aus einem Fluidstrom angewendet werden. Das Kohlenmonoxid entweicht dann zu einem großen Teil über die in der Dekompressionszone erhaltene Gasphase, da es wie $C_5$-$C_8$-Kohlenwasserstoffe nur physikalisch im Absorptionsmittel gelöst wird. Der Kohlenmonoxidgehalt der im Stripper freigesetzten Sauergase lässt sich dann im Vergleich zu Verfahren des Stands der Technik verringern. Die Anwendung des erfindungsgemäßen Verfahrens zur (zusätzlichen) Abtrennung von Kohlenmonoxid empfiehlt sich insbesondere, wenn man Sauergase aus kohlenmonoxidreichen Fluidströmen, wie z. B. Synthesegas, abscheidet. Bei der Freisetzung des Sauergasstroms einzuhaltende CO-Emissionsgrenzwerte lassen sich dann besser, also ggfs. mit geringerem Nachbehandlungsaufwand, einhalten.

Dem erfindungsgemäßen Verfahren können Fluidströme mit einer großen Bandbreite unterschiedlicher Drücke zugeführt werden. Vorzugsweise hat der zugeführte Fluidstrom einen Druck von 30 bis 120 bar, insbesondere 50 bis 80 bar.

Bei dem zugeführten Fluidstrom kann es sich einerseits z. B. um ein Gas handeln, wie Erdgas, Synthesegas, Koksofengas, Spaltgas, Kohlevergasungsgas, Kreisgas, Deponiegase und Verbrennungsgase, und andererseits um eine mit dem Absorptionsmittel im Wesentlichen nicht mischbare Flüssigkeit, wie LPG (Liquefied Petroleum Gas) oder NGL (Natural Gas Liquids).

In bevorzugten Ausführungsformen ist der zugeführte Fluidstrom ein

(i) Wasserstoff enthaltender Fluidstrom; hierzu zählen Synthesegase, die z. B. durch Kohlevergasung oder Steamreforming herstellbar sind und gegebenenfalls einer Wassergas-Shift-Reaktion unterzogen sind; die Synthesegase werden z. B. zur Herstellung von Ammoniak, Methanol, Formaldehyd, Essigsäure, Harnstoff, zur Fischer-Tropsch-Synthese oder zur Energiegewinnung in einem Integrated Gasification Combined Cycle (IGCC) Prozess verwendet;

(ii) Kohlenwasserstoffe enthaltender Fluidstrom; hierzu zählen Erdgas, Abgase verschiedener Raffinerieprozesse, wie der Tailgas Unit (TGU), eines Visbreakers (VDU), eines katalytischen Crackers (LRCUU/FCC), eines Hydrocrackers (HCU), eines Hydrotreaters (HDS/HTU), eines Cokers (DCU), einer Atmosphärischen Destillation (CDU) oder eines Liquid Treaters (z. B. LPG).

In einer bevorzugten Ausführungsform des erfindungsgemäßen Verfahrens ist der zugeführte Fluidstrom Erdgas.

Der Partialdruck der Sauergase im zugeführten Fluidstrom beträgt in einer Ausführungsform weniger als 3 bar, vorzugsweise weniger als 2 bar, insbesondere weniger als 1 bar.

Das erfindungsgemäße Verfahren ist besonders vorteilhaft, wenn die Absorptionszone so betrieben wird, dass die Temperatur des die Absorptionszone passierenden Absorptionsmittels in der Absorptionszone fällt, gleichbleibt oder nur geringfügig, z. B. um höchstens 10 K oder 5 K, ansteigt. Bevorzugt liegt die Differenz, die man durch Subtraktion der Temperatur, des aus der Absorptionszone abgeführten beladenen Absorptionsmittels von der Temperatur, des in die Absorptionszone eingeleiteten Absorptionsmittels, bildet, im Bereich von -25 K bis +35 K, insbesondere im Bereich von -5 K bis +20 K. Das vom ersten Wärmetauscher abströmende regenerierte Absorptionsmittel muss dann vor der Rückführung in die Absorptionszone nicht oder nur noch geringfügig gekühlt werden, denn eine ausreichende Kühlung wird dann schon im ersten Wärmetauscher durch den Wärmetausch mit dem beladenen Absorptionsmittel erreicht. Folglich entfällt der Aufwand für eine weitere Kühlung zu einem großen Teil oder ganz. Insbesondere dann bietet es sich an, die weit überwiegende Wärmemenge im ersten Wärmetauscher zu übertragen oder den zweiten Wärmetauscher wegzulassen. Denn es besteht dann die Notwendigkeit einer stärkeren Erwärmung des erhaltenen kalten, mit Sauergasen beladenen Absorptionsmittels. Nur bei einer ausreichend starken Erwärmung des beladenen Absorptionsmittel wird bei dem erfindungsgemäß vorgegebenen Druck in der Dekompressionszone eine $C_5$-$C_8$-Kohlenwasserstoffe enthaltende Gasphase mit dem geforderten Sauergasgehalt erhalten.

Die Temperatur des Absorptionsmittels wird beim Passieren der Absorptionszone von mehreren Faktoren beeinflusst.

Zum einen wirkt die Zufuhr eines kalten Fluidstroms einer starken Erwärmung des Absorptionsmittels entgegen. Die Temperatur des zugeführten Fluidstroms beträgt beispielsweise weniger als 70 °C, insbesondere weniger als 50 °C, z. B. 10 bis 35 °C.

Zum anderen wirkt ein (im Vergleich zum zugeführten Fluidstrom) schwacher Absorptionsmittelstrom einer Erwärmung des Absorptionsmittels entgegen. Wenn der Wärmekapazitätsstrom des Absorptionsmittelstroms geringer ist, als der Wärmekapazitätsstrom des zugeführten Fluidstroms, wird die bei der exothermen Absorption der Sauergase freigesetzte Wärme überwiegend über den entsäuerten Fluidstrom aus der Absorptionszone abgeführt. Vorzugsweise ist der Quotient der beiden Wärmekapazitätsströme φ deshalb kleiner als 1, vorzugsweise kleiner als 0,95, insbesondere kleiner als 0,90, wobei φ definiert ist als

$$\varphi = \frac{\dot{m}_a \cdot c_{pa}}{\dot{m}_f \cdot c_{pf}}$$

worin

$\dot{m}_a$ für den Massenstrom des in die Absorptionszone geführten Absorptionsmittels steht,
$\dot{m}_f$ für den Massenstrom des zugeführten Fluidstroms steht,
$c_{pa}$ für die spezifische Wärmekapazität des in die Absorptionszone geführten Absorptionsmittels steht, und
$c_{pf}$ für die spezifische Wärmekapazität des zugeführten Fluidstroms steht.

Mit einem im Vergleich zum zugeführten Fluidstrom schwachen Absorptionsmittelstrom wird eine ausreichende Abtrennung von Sauergasen insbesondere erreicht, wenn der Volumenanteil der Sauergase im zugeführten Fluidstrom gering ist. In einer bevorzugten Ausführungsform beträgt der Volumenanteil der Sauergase im zugeführten Fluidstrom weniger als 5 Vol.-%, vorzugsweise weniger als 3,3 Vol.-%, insbesondere weniger als 2,5 Vol.-%, z. B. 0,1 bis 2,5 Vol.-%.

In einer besonders bevorzugten Ausführungsform des erfindungsgemäßen Verfahrens beträgt die Temperatur des zugeführten Fluidstroms weniger als 70 °C, insbesondere weniger als 50 °C, z. B. 10 bis 35 °C; der Volumenanteil der Sauergase im zugeführten Fluidstrom weniger als 5 Vol.-%, vorzugsweise weniger als 3,3 Vol.-%, insbesondere weniger als 2,5 Vol.-%, z. B. 0,1 bis 2,5 Vol.-%; und φ weniger als 1, vorzugsweise weniger als 0,95, insbesondere weniger als 0,90.

Die Erfindung wird durch die beigefügten Zeichnungen und die nachfolgenden Beispiele näher veranschaulicht.

Figur 1 zeigt schematisch eine nur den zweiten Wärmetauscher aufweisende Anlage zur Durchführung eines nicht erfindungsgemäßen Verfahrens.

Figur 2 zeigt schematisch eine den ersten und den zweiten Wärmetauscher aufweisenden Anlage zur Durchführung des erfindungsgemäßen Verfahrens.

Figur 3 zeigt schematisch eine nur einen Wärmetauscher aufweisende Anlage zur Durchführung eines nicht erfindungsgemäßen Verfahrens, bei dem man das Kohlenwasserstoff-abgereicherte beladene Absorptionsmittel vor dem Erwärmen in dem zweiten Wärmetauscher in einer Desorptionszone auf einen Druck von 1 bis 2,5 bar entspannt und durch direkten Wärmetausch mit dem Sauergas enthaltenden Strom vorerwärmt. Der Wärmetauscher des in Fig. 3 dargestellten Verfahrens entspricht dem optionalen zweiten Wärmetauscher des erfindungsgemäßen Verfahrens.

Figur 4 zeigt schematisch eine den ersten und den zweiten Wärmetauscher aufweisenden Anlage zur Durchführung des erfindungsgemäßen Verfahrens, bei dem man das Kohlenwasserstoff-abgereicherte beladene Absorptionsmittel vor dem Erwärmen in dem zweiten Wärmetauscher in einer Desorptionszone auf einen Druck von 1 bis 2,5 bar entspannt und durch direkten Wärmetausch mit dem Sauergas enthaltenden Strom vorerwärmt.

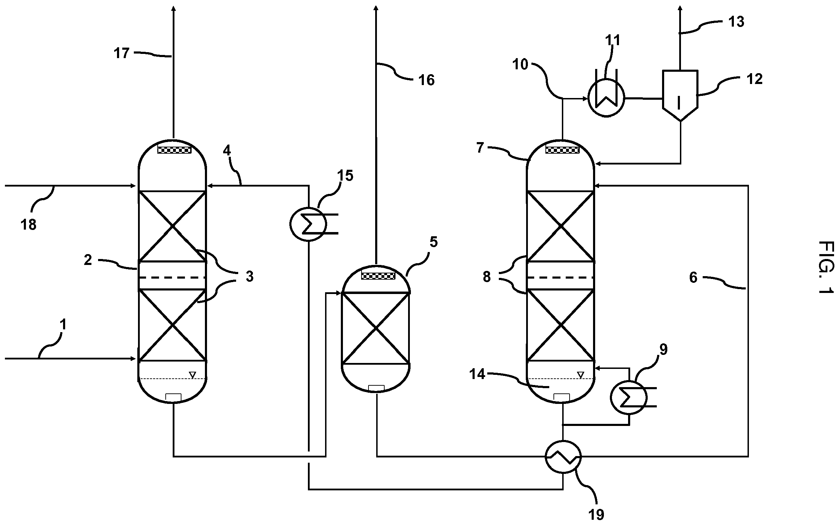

Gemäß Figur 1 wird ein Fluidstrom 1 in den unteren Teil einer Absorptionskolonne 2 geleitet. Die Absorptionskolonne 2 weist eine Absorptionszone 3 auf, die zwei übereinander angeordnete Abschnitte mit Packungen umfasst. In der Absorptionszone 3 wird der Fluidstrom im Gegenstrom mit einem Absorptionsmittel in Kontakt gebracht, das über die Leitung 4 oberhalb der Absorptionszone in die Absorptionskolonne 2 eingeführt wird. Den entsäuerten Fluidstrom entnimmt man über Leitung 17. Frischwasser wird über Leitung 18 zugeführt.

Das mit Sauergasen beladene Absorptionsmittel wird am Boden der Absorptionskolonne 2 entnommen und über ein Drosselventil (nicht dargestellt) in die Dekompressionszone des Entspannungsbehälters 5 auf einen Druck von 5 bis 10 bar entspannt. Die Entspannung führt zur Desorption coabsorbierter Bestandteile des Fluidstroms und eines Teils der Sauergase, die über Strom 16 entnommen werden. Das auf einen Druck von 5 bis 10 bar entspannte Absorptionsmittel wird über den Wärmetauscher 19 und Leitung 6 in den Stripper 7 geführt. Der Stripper 7 weist eine Regenerationszone 8 auf, die zwei übereinander angeordnete Abschnitte mit Packungen umfasst. Im unteren Teil des Strippers 7 wird das entspannte Absorptionsmittel über den Verdampfer 9 erwärmt und partiell verdampft. Durch die Temperaturerhöhung werden die absorbierten Sauergase freigesetzt. Der Sauergase enthaltende Strom wird über die Leitung 10 am Kopf des Strippers 7 abgeführt und dem Kühler 11 zugeführt. Am Kühler 11 wird ein Sauergaskondensat gewonnen, das im Phasentrenngefäß 12 gesammelt und in den Stripper zurückgeführt wird. Die Sauergase werden als Strom 13 entnommen. Das regenerierte Absorptionsmittel 14 wird über den Wärmetauscher 19, Kühler 15, eine Pumpe (nicht dargestellt), und Leitung 4 wieder in die Absorptionskolonne 2 zurückgeführt.

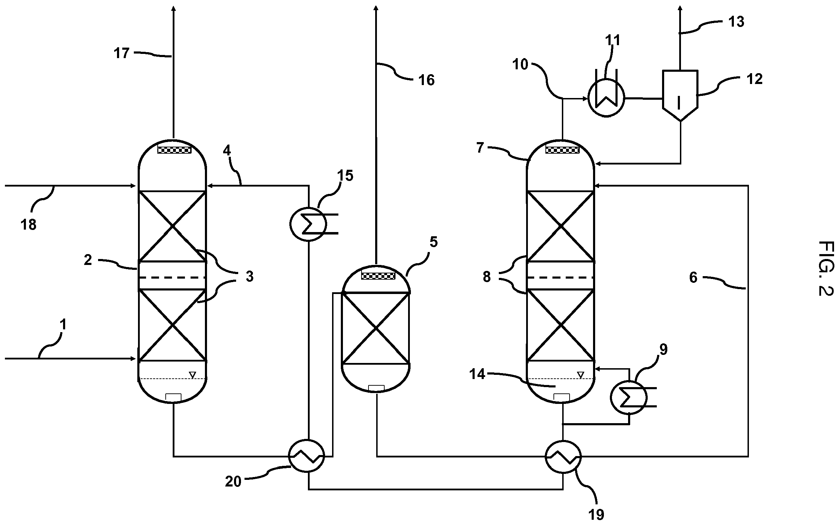

Figur 2 zeigt eine erfindungsgemäße Ausführungsform. In Figur 2 haben gleiche Bezugszeichen die gleiche Bedeutung wie in Figur 1. Im Unterschied zur Figur 1 wird das am Boden der Absorptionskolonne 2 entnommene, mit Sauergasen beladene Absorptionsmittel über einen Wärmetauscher 20 geführt und dann über das Drosselventil (nicht dargestellt) in die Dekompressionszone des Entspannungsbehälters 5 auf einen Druck von 5 bis 10 bar entspannt. Das regenerierte Absorptionsmittel 14 wird über den Wärmetauscher 19, Wärmetauscher 20, Kühler 15, eine Pumpe (nicht dargestellt), und Leitung 4 wieder in die Absorptionskolonne 2 zurückgeführt.

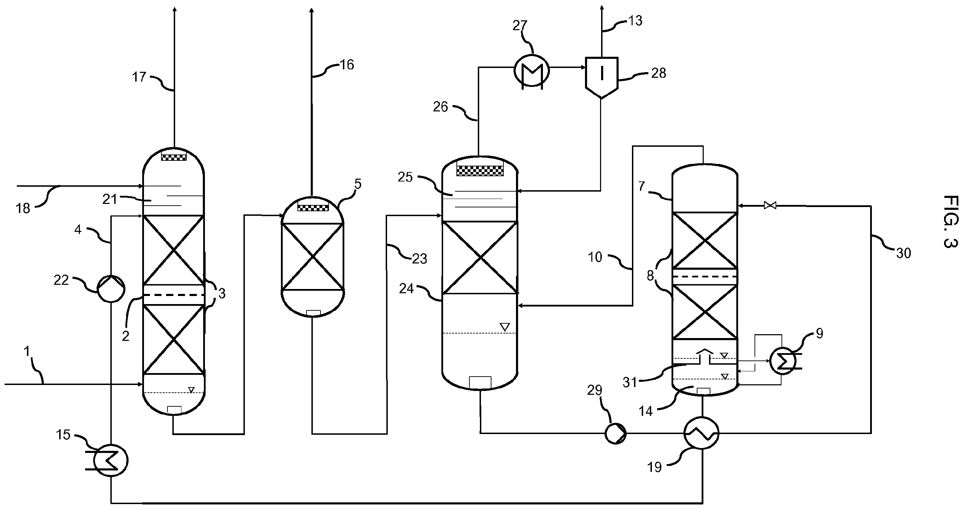

In Figur 3 haben gleiche Bezugszeichen die gleiche Bedeutung wie in Figur 1. Das auf einen Druck von 5 bis 10 bar entspannte Absorptionsmittel wird über Leitung 23 in den Niederdruck-Entspannungsbehälter 24 geführt. Leitung 23 mündet zwischen der im Niederdruck-Entspannungsbehälter unterhalb angeordneten Desorptionszone und einer im Niederdruck-Entspannungsbehälter oberhalb angeordneten Verstärkungszone 25. Der Sauergase enthaltende Strom wird über die Leitung 10 am Kopf des Strippers 7 abgeführt und dem Niederdruck-Entspannungsbehälter 24 zugeführt. Leitung 10 mündet in den Niederdruck-Entspannungsbehälter 24 im Bereich zwischen Sumpf und Desorptionszone. In der Desorptionszone wird der über Leitung 10 zugeführte Sauergase enthaltende Strom im Gegenstrom mit dem über Leitung 23 zugeführten Absorptionsmittel in Kontakt gebracht. Anschließend passiert der Sauergase enthaltende Strom die Verstärkungszone 25 und wird über Leitung 26 am Kopf des Niederdruck-Entspannungsbehälters 24 abgeführt und dem Kühler 27 zugeführt. Am Kühler 27 wird ein Sauergaskondensat gewonnen, das im Phasentrenngefäß 28 gesammelt und in den Niederdruck-Entspannungsbehälter 24 in den Bereich oberhalb der Verstärkungszone 25 zurückgeführt wird. Die Sauergase werden als Strom 13 entnommen.

Das auf 1 bis 2,5 bar entspannte Absorptionsmittel wird über eine Leitung aus dem Sumpf des Niederdruck-Entspannungsbehälters entnommen und mit Hilfe der optionalen Pumpe 29 über den Wärmetauscher 19 sowie Leitung 30 in den Stripper 7 geführt. Unterhalb der Regenerationszone 8 wird das Absorptionsmittel auf Sammelboden 31 gesammelt, über den Verdampfer 9 erwärmt und partiell verdampft und in den Sumpfbereich unterhalb des Sammelbodens 31 geführt. Das regenerierte Absorptionsmittel 14 wird über den Wärmetauscher 19, Kühler 15, Pumpe 22 und Leitung 4 wieder in die Absorptionskolonne 2 zurückgeführt. In der Absorptionskolonne 2 befindet sich oberhalb der Absorptionszone 3 die Waschzone 21. Das Frischwasser 18 wird oberhalb der Waschzone 21 eingespeist.

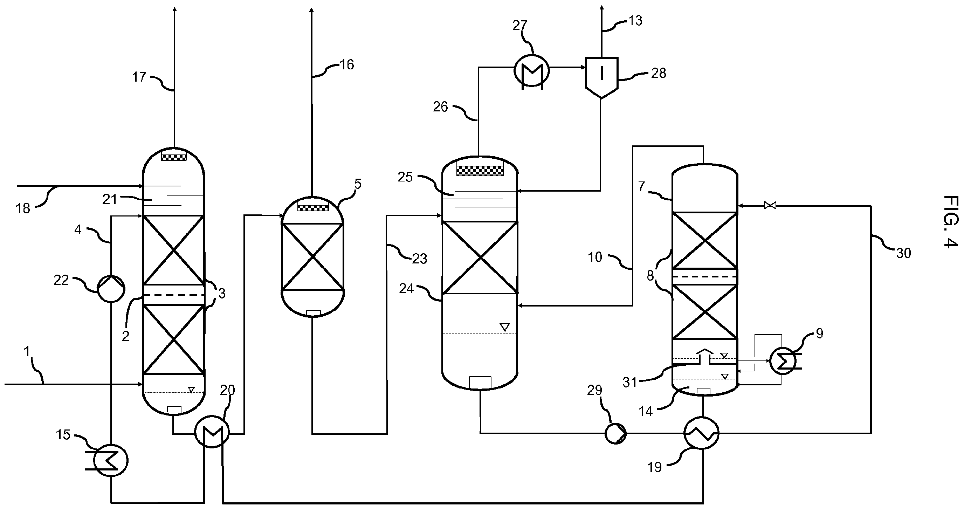

Figur 4 zeigt eine erfindungsgemäße Ausführungsform. In Figur 4 haben gleiche Bezugszeichen die gleiche Bedeutung wie in Figuren 1, 2 und 3. Im Unterschied zur Figur 3 wird das am Boden der Absorptionskolonne 2 entnommene, mit Sauergasen beladene Absorptionsmittel über einen Wärmetauscher 20 geführt und dann über das Drosselventil (nicht dargestellt) in das Entspannungsbehälter 5 auf einen Druck von 5 bis 10 bar entspannt. Das regenerierte Absorptionsmittel 14 wird über den Wärmetauscher 19, Wärmetauscher 20, Kühler 15, Pumpe 22, und Leitung 4 wieder in die Absorptionskolonne 2 zurückgeführt.

Beispiele

Allgemeine Angaben

Zusammensetzung, Fluss, Temperatur und Druck des Fluidstroms 1 der nachfolgenden Beispiele betrugen:

| | |
|---|---|
| 2,0000 Vol.-% | $CO_2$ |
| 0,0004 Vol.-% | $H_2S$ |
| 1,0000 Vol.-% | $N_2$ |
| 92,9796 Vol.-% | $CH_4$ |
| 2,0000 Vol.-% | $C_2H_6$ |
| 1,0000 Vol.-% | $C_3H_8$ |
| 1,0000 Vol.-% | $C_6H_{14}$ |
| 0,0050 Vol.-% | Benzol |
| 0,0050 Vol.-% | Toluol |

(fortgesetzt)

| 0,0050 Vol.-% | Ethylbenzol |
|---|---|
| 0,0050 Vol.-% | o-Xylol |

| Fluss (trocken): 500000 | $Nm^3/h$ |
|---|---|
| Fluss (Wasser): 74 | $Nm^3/h$ |
| Fluss (gesamt): 500074 | $Nm^3/h$ |
| Fluss (gesamt): 401605 | kg/h |

| Temperatur: | 30,0 °C |
|---|---|
| Druck: | 66,0 bar |

All die im vorliegenden Dokument angegebenen Drücke sind Absolutdrücke.

Im vorliegenden Dokument steht "$Nm^3/h$" für den in Normkubikmetern pro Stunde angegebenen Volumenstrom. Der Normkubikmeter ist bezogen auf eine Temperatur von 273,15 K und einen Druck von 1,01325 bar. Alle Angaben in der Einheit "Vol.-%" beziehen sich ebenfalls auf diese Bedingungen.

Die Temperatur des (je bis auf einen Restgehalt von höchstens 0,005 Vol.-% $CO_2$) entsäuerten Fluidstroms 17 betrug je 56 °C. Der Druck des entsäuerten Fluidstroms 17 betrug je 65,9 bar.

Das Absorptionsmittel war in allen Beispielen eine wässrige Lösung von 33,5 Gew.-% Methyldiethanolamin und 6,5 Gew.-% Piperazin in Wasser. Über Leitung 4 wurden je 247 t/h Absorptionsmittel mit einer Temperatur von 40,0 °C oberhalb der Absorptionszone in die Absorptionskolonne 2 eingeführt. Die Temperatur des über Leitung 18 zugeführten Frischwassers betrug ebenfalls 40,0 °C. Die Temperatur des am Boden der Absorptionskolonne 2 entnommenen, mit Sauergasen beladenen Absorptionsmittels, betrug je 35,4 °C.

Die Beispiele beruhen auf Rechnungen, die mittels eines Simulationsmodells durchgeführt wurden. Zur Beschreibung der Phasengleichgewichte wurde ein Modell von Pitzer (K. S. Pitzer, Activity Coefficients in Electrolyte Solutions 2nd ed., CRC Press, 1991, Chapter 3, Ion Interaction Approach: Theory) verwendet. Die Simulation der Absorptionsvorgänge wird mittels eines stoffübergangsbasierten Ansatzes beschrieben; Details dazu sind bei Asprion (Asprion, N.: Nonequilibrium Rate-Based Simulation of Reactive Systems: Simulation Model, Heat Transfer, and Influence of Film Discretization, Ind. Eng. Chem. Res. (2006) 45(6), 2054-2069) beschrieben.

Die Absorptionskolonne 2 hatte einen Durchmesser von 3200 mm und wies eine Absorptionszone 3 mit zwei regellosen Packungen (INTALOX® Metal Tower Packing IMTP 50, Koch-Glitsch, Wichita USA), jeweils mit einer Packungshöhe von 7 Metern auf. Der Stripper 7 hatte einen Durchmesser von 2300 mm und wies eine Regernationszone 8 mit zwei regellosen Packungen (INTALOX® Metal Tower Packing IMTP 50, Koch-Glitsch, Wichita USA), jeweils mit einer Packungshöhe von 5 Metern auf. Die Entspannungsbehälter 5 bzw. 24 hatten je einen Durchmesser von 2200 mm und wiesen eine Dekompressionszone bzw. eine Desorptionszone mit je einer regellosen Packung (INTALOX® Metal Tower Packing IMTP 50, Koch-Glitsch, Wichita USA) mit einer Packungshöhe von 5 Metern auf.

Vergleichsbeispiel 1

Man simulierte ein Verfahren in einer Anlage gemäß Figur 1. In den Entspannungsbehälter 5 wurde das mit Sauergasen beladene Absorptionsmittel auf einen Druck von 6,2 bar entspannt. Die Temperatur der über Strom 16 abgeführten Gasphase und des aus dem Entspannungsbehälter nach unten ausgeleiteten Absorptionsmittels betrug je 34,6 °C. Der Stripper 7 wurde bei einem Druck von 1,7 bar betrieben. Über Leitung 18 wurden 1,87 t/h Frischwasser zugeführt.

Der Energieverbrauch der Kühler 11 und 15 und des Verdampfers 9 sowie die über Wärmetauscher 19 übertragene Wärmemenge geht aus Tabelle 1 hervor. Die Kondensationstemperatur (Kühler 11) lag im üblichen Bereich war in diesem und in den übrigen Beispielen und Vergleichsbeispielen gleich. Folglich war auch die Temperatur des Stroms 13 in allen Beispielen und Vergleichsbeispielen gleich.

Beispiel 2

Man simulierte ein Verfahren in einer Anlage gemäß Figur 2. In den Entspannungsbehälter 5 wurde das mit Sauergasen beladene Absorptionsmittel auf einen Druck von 6,2 bar entspannt. Die Temperatur der über Strom 16 abgeführten Gasphase und des aus dem Entspannungsbehälter nach unten ausgeleiteten Absorptionsmittels betrug je 95,8 °C. Der Stripper wurde bei einem Druck von 1,7 bar betrieben. Über Leitung 18 wurden 1,95 t/h Frischwasser zugeführt.

Der Energieverbrauch der Kühler 11 und 15 und des Verdampfers 9 sowie die über Wärmetauscher 19 und 20 übertragenen Wärmemenge gehen aus Tabelle 1 hervor.

Vergleichsbeispiel 3

Man simulierte ein Verfahren in einer Anlage gemäß Figur 3. In den Entspannungsbehälter 5 wurde das mit Sauergasen beladene Absorptionsmittel auf einen Druck von 6,2 bar entspannt. Die Temperatur der über Strom 16 abgeführten Gasphase und des aus dem Entspannungsbehälter nach unten ausgeleiteten Absorptionsmittels betrug je 34,6 °C. Der Niederdruck-Entspannungsbehälter wurde bei einem Druck von 1,7 bar und der Stripper bei einem Druck von 1,8 bar betrieben. Über Leitung 18 wurden 1,86 t/h Frischwasser zugeführt.

Der Energieverbrauch der Kühler 11 und 15 und des Verdampfers 9 sowie die über Wärmetauscher 19 übertragene Wärmemenge geht aus Tabelle 1 hervor.

Beispiel 4

Man simulierte ein Verfahren in einer Anlage gemäß Figur 4. In den Entspannungsbehälter 5 wurde das mit Sauergasen beladene Absorptionsmittel auf einen Druck von 6,2 bar entspannt. Die Temperatur der über Strom 16 abgeführten Gasphase und des aus dem Entspannungsbehälter nach unten ausgeleiteten Absorptionsmittels betrug je 95,8 °C. Der Niederdruck-Entspannungsbehälter wurde bei einem Druck von 1,7 bar und der Stripper bei einem Druck von 1,8 bar betrieben. Über Leitung 18 wurden 1,94 t/h Frischwasser zugeführt.

Der Energieverbrauch der Kühler 11 und 15 und des Verdampfers 9 sowie die über Wärmetauscher 19 und 20 übertragenen Wärmemenge gehen aus Tabelle 1 hervor.

Tabelle 1: Energieverbrauch für Kühlung, Verdampfung, Wärmetausch (Einheit: MW)

| Kühler Verdampfer bzw. Wärmetauscher | Vergleichsbsp. 1 | Beispiel 2 | Vergleichsbsp. 3 | Beispiel 4 |
|---|---|---|---|---|
| 9 | 14,7 | 14,7 | 14,6 | 11,4 |
| 11 bzw. 27* | -6,0 | -5,7 | -0,1 | -2,4 |
| 15* | 0,1** | -0,1** | -5,8 | -0,1** |
| 19 | 20,1 | 3,8 | 14,9 | 4,5 |
| 20 | - | 16,1 | - | 16,1 |
| *: Der durch Kühlung bedingte Energieverbrauch ist mit negativem Vorzeichen angegeben. In der dem Vergleichsbeispiel 1 zugrundeliegenden Simulation wurde in 15 Wärme zugeführt (deshalb ist das Vorzeichen positiv). **: Bei der praktischen Umsetzung des Verfahrens würde man diesen Kühler/Wärmetauscher weglassen. | | | | |

Eigenschaften der Ströme 16 und 13 der Beispiele 1 bis 4 sind in Tabelle 2 angegeben.

Wie aus Tabelle 2 hervorgeht, ist in den erfindungsgemäßen Beispielen der Volumenanteil der $C_5$-$C_8$-Kohlenwasserstoffe ($C_6H_{14}$, Benzol, Toluol, Ethylbenzol, o-Xylol) in den über Strom 13 entnommenen Sauergasen geringer, als in den Vergleichsbeispielen. Erfindungsgemäß lassen sich $C_5$-$C_8$-Kohlenwasserstoffe also zu einem höheren Anteil abtrennen.

Außerdem fallen die $C_5$-$C_8$-Kohlenwasserstoffe in Strom 16 bei einem Druck von 6,2 bar an, so dass kein zusätzlicher Kompressionsaufwand betrieben werden muss, um sie der Brenngasanlage zuzuführen.

In Beispiel 4 betrug die Leistung des Verdampfers 9 (also die für die Regeneration erforderliche Leistung) nur 11,4 MW und damit 3,2 bis 3,3 MW weniger, als in den Beispielen 1 bis 3. Auch der durch die Kühlung bedingte Energieverbrauch war in diesem Beispiel geringer, als in den Beispielen 1 bis 3. Die Kombination der erfindungsgemäßen Verfahrensführung mit dem Vorerwärmen des Kohlenwasserstoff-abgereicherten beladenen Absorptionsmittels durch direkten Wärmetausch mit dem Sauergas enthaltenden Strom bietet hinsichtlich des Energieverbrauchs demnach einen synergistischen Effekt.

Tabelle 2

| Strom | | Vergleichsbsp. 1 | | Beispiel 2 | | Vergleichsbsp. 3 | | Beispiel 4 | |
|---|---|---|---|---|---|---|---|---|---|
| | | 16 | 13 | 16 | 13 | 16 | 13 | 16 | 13 |
| $CO_2$ | Vol.-% | 2,5664 | 99,7065 | 75,1282 | 99,9048 | 2,5667 | 99,7066 | 75,1342 | 99,9048 |
| $H_2S$ | Vol.-% | 0,0011 | 0,0200 | 0,0069 | 0,0209 | 0,0011 | 0,0200 | 0,0070 | 0,0209 |
| $N_2$ | Vol.-% | 0,5571 | 0,0007 | 0,1359 | 0,0002 | 0,5571 | 0,0007 | 0,1358 | 0,0002 |
| $CH_4$ | Vol.-% | 93,9195 | 0,2315 | 23,8084 | 0,0539 | 93,9191 | 0,2314 | 23,8026 | 0,0539 |
| $C_2H_6$ | Vol.-% | 1,6625 | 0,0051 | 0,4304 | 0,0011 | 1,6625 | 0,0051 | 0,4303 | 0,0011 |
| $C_3H_8$ | Vol.-% | 0,7047 | 0,0022 | 0,1832 | 0,0005 | 0,7047 | 0,0022 | 0,1831 | 0,0005 |
| $C_6H_{14}$ | Vol.-% | 0,5404 | 0,0027 | 0,1493 | 0,0004 | 0,5404 | 0,0027 | 0,1493 | 0,0004 |
| Benzol | Vol.-% | 0,0156 | 0,0079 | 0,0251 | 0,0063 | 0,0156 | 0,0079 | 0,0251 | 0,0063 |
| Toluol | Vol.-% | 0,0145 | 0,0076 | 0,0386 | 0,0044 | 0,0145 | 0,0076 | 0,0386 | 0,0044 |
| Ethylbenzol | Vol.-% | 0,0092 | 0,0069 | 0,0435 | 0,0031 | 0,0092 | 0,0069 | 0,0435 | 0,0031 |
| o-Xylol | Vol.-% | 0,0090 | 0,0089 | 0,0504 | 0,0044 | 0,0090 | 0,0089 | 0,0504 | 0,0044 |
| Fluss (trocken) | $Nm^3$/h | 231 | 9999 | 989 | 9241 | 231 | 9999 | 989 | 9241 |
| Wasser | $Nm^3$/h | 2 | 508 | 143 | 469 | 2 | 492 | 143 | 455 |
| Fluss (gesamt) | $Nm^3$/h | 233 | 10507 | 1132 | 9711 | 233 | 10491 | 1132 | 9696 |
| Fluss (gesamt) | kg/h | 184 | 20019 | 1766 | 18520 | 184 | 20006 | 1766 | 18508 |
| Temperature | °C | 34,6 | - | 95,8 | - | 34,6 | - | 95,8 | - |
| Pressure | bar | 6,2 | 1,6 | 6,2 | 1,6 | 6,2 | 1,6 | 6,2 | 1,6 |

**Patentansprüche**

1.  Verfahren zur Abtrennung von $C_5$-$C_8$-Kohlenwasserstoffen und Sauergasen aus einem Fluidstrom, wobei man

    a) den Fluidstrom in einer Absorptionszone mit einem Absorptionsmittel in Kontakt bringt, das mindestens ein Amin enthält, wobei man einen entsäuerten Fluidstrom und ein mit Sauergasen beladenes Absorptionsmittel erhält,
    b) das beladene Absorptionsmittel in einem ersten Wärmetauscher erwärmt und in eine Dekompressionszone auf einen Druck von 5 bis 10 bar entspannt, wobei man eine $C_5$-$C_8$-Kohlenwasserstoffe enthaltende Gasphase und ein Kohlenwasserstoff-abgereichertes beladenes Absorptionsmittel erhält,
    c) das Kohlenwasserstoff-abgereicherte beladene Absorptionsmittel in einen Stripper leitet, in dem die Sauergase bei einem Druck von 1 bis 2,5 bar durch Zufuhr von Wärme zumindest teilweise freigesetzt werden, wobei man ein regeneriertes Absorptionsmittel und einen Sauergas enthaltenden Strom erhält, wobei man das Kohlenwasserstoff-abgereicherte beladene Absorptionsmittel gegebenenfalls vor dem Einleiten in den Stripper in einem zweiten Wärmetauscher erwärmt, und
    d) das regenerierte Absorptionsmittel in die Absorptionszone zurückführt,

    wobei man,
    wenn der zweite Wärmetauscher vorhanden ist, als Heizmedium im zweiten Wärmetauscher das regenerierte Absorptionsmittel verwendet und als Heizmedium im ersten Wärmetauscher das regenerierte Absorptionsmittel nach dem Passieren des zweiten Wärmetauschers verwendet, oder, wenn der zweite Wärmetauscher nicht vorhanden ist, als Heizmedium im ersten Wärmetauscher das regenerierte Absorptionsmittel verwendet,
    und wobei man
    im ersten Wärmetauscher so viel Wärme überträgt, dass die $C_5$-$C_8$-Kohlenwasserstoffe enthaltende Gasphase 50 bis 97 Vol.-% Sauergase enthält.

2.  Verfahren nach Anspruch 1, bei dem der zweite Wärmetauscher vorhanden ist und bei dem man das Kohlenwasserstoff-abgereicherte beladene Absorptionsmittel vor dem Erwärmen in dem zweiten Wärmetauscher in eine Desorptionszone auf einen Druck von 1 bis 2,5 bar entspannt und durch direkten Wärmetausch mit dem Sauergas enthaltenden Strom vorerwärmt.

3. Verfahren nach Anspruch 1 oder 2, wobei man den Fluidstrom in der Absorptionszone mit dem Absorptionsmittel bei einem Druck von 50 bis 80 bar in Kontakt bringt.

4. Verfahren nach einem der vorhergehenden Ansprüche, wobei der Partialdruck der Sauergase im zugeführten Fluidstrom weniger als 1 bar beträgt.

5. Verfahren nach einem der vorhergehenden Ansprüche, wobei der Volumenanteil der Sauergase im zugeführten Fluidstrom weniger als 3,3 Vol.-% beträgt.

6. Verfahren nach einem der vorhergehenden Ansprüche, wobei die Temperatur des zugeführten Fluidstroms weniger als 70 °C beträgt.

7. Verfahren nach einem der vorhergehenden Ansprüche, wobei die $C_5$-$C_8$-Kohlenwasserstoffe enthaltende Gasphase 70 bis 95 Vol.-% Sauergase enthält.

8. Verfahren nach einem der vorhergehenden Ansprüche, wobei man das in dem ersten Wärmetauscher erwärmte beladene Absorptionsmittel in die Dekompressionszone auf einen Druck von >6 bis 10 bar entspannt.

9. Verfahren nach einem der vorhergehenden Ansprüche, wobei man die $C_5$-$C_8$-Kohlenwasserstoffe aus der $C_5$-$C_8$-Kohlenwasserstoffe enthaltenden Gasphase zumindest teilweise auskondensiert und die nicht-kondensierten Bestandteile in die Absorptionszone führt.

10. Verfahren nach einem der vorhergehenden Ansprüche, wobei die $C_5$-$C_8$-Kohlenwasserstoffe aromatische Kohlenwasserstoffe umfassen, die unter Benzol, Toluol, Ethylbenzol und Xylolen ausgewählt sind.

11. Verfahren nach einem der vorhergehenden Ansprüche, wobei der zugeführte Fluidstrom unter Fluidströmen ausgewählt ist, die 0,5 bis 10 Vol.-% Sauergase und 10 bis 5 000 ppmv $C_5$-$C_8$-Kohlenwasserstoffe enthalten.

12. Verfahren nach einem der vorhergehenden Ansprüche, wobei der zugeführte Fluidstrom Erdgas ist.

13. Verfahren nach einem der vorhergehenden Ansprüche, bei dem $\varphi$ kleiner als 1 ist und $\varphi$ definiert ist als

$$\varphi = \frac{\dot{m}_a \cdot c_{pa}}{\dot{m}_f \cdot c_{pf}}$$

worin

$\dot{m}_a$ für den Massenstrom des in die Absorptionszone geführten Absorptionsmittels steht,
$\dot{m}_f$ für den Massenstrom des zugeführten Fluidstroms steht,
$c_{pa}$ für die spezifische Wärmekapazität des in die Absorptionszone geführten Absorptionsmittels steht, und
$c_{pf}$ für die spezifische Wärmekapazität des zugeführten Fluidstroms steht.

14. Verfahren nach einem der vorhergehenden Ansprüche, wobei das Amin ein sterisch gehindertes Amin oder ein tertiäres Amin ist.

15. Verfahren nach Anspruch 14, wobei das Absorptionsmittel zudem ein sterisch ungehindertes primäres oder sekundäres Amin enthält.


**Claims**

1. A process for removing $C_5$-$C_8$-hydrocarbons and acid gases from a fluid stream, wherein

a) the fluid stream is brought into contact with an absorption medium comprising at least one amine in an absorption zone to obtain a deacidified fluid stream and an acid-gases-laden absorption medium,

b) the laden absorption medium is heated in a first heat exchanger and decompressed into a decompression zone to a pressure of from 5 to 10 bar to obtain a $C_5$-$C_8$-hydrocarbons-comprising gas phase and a hydrocarbon-depleted laden absorption medium,

c) the hydrocarbon-depleted laden absorption medium is passed into a stripper in which at a pressure of 1 to 2.5 bar the acid gases are at least partially liberated by supplying heat to obtain a regenerated absorption medium and an acid-gas-comprising stream, the hydrocarbon-depleted laden absorption medium optionally being heated in a second heat exchanger before being introduced into the stripper, and

d) the regenerated absorption medium is recycled into the absorption zone,

wherein,

if the second heat exchanger is present, the heating medium used in the second heat exchanger is the regenerated absorption medium and the heating medium used in the first heat exchanger is the regenerated absorption medium after it has passed through the second heat exchanger, or, if the second heat exchanger is not present, the heating medium used in the first heat exchanger is the regenerated absorption medium,

and

the amount of heat transferred in the first heat exchanger is such that the $C_5$-$C_8$-hydrocarbons-comprising gas phase comprises 50% to 97% by volume of acid gases.

2. The process according to claim 1, where the second heat exchanger is present and where before the heating in the second heat exchanger the hydrocarbon-depleted laden absorption medium is decompressed into a desorption zone to a pressure of 1 to 2.5 bar and preheated by direct heat exchange with the acid-gas-comprising stream.

3. The process according to either of claims 1 and 2, wherein the fluid stream is brought into contact with the absorption medium in the absorption zone at a pressure of 50 to 80 bar.

4. The process according to any of the preceding claims, wherein the partial pressure of the acid gases in the supplied fluid stream is less than 1 bar.

5. The process according to any of the preceding claims, wherein the volume fraction of the acid gases in the supplied fluid stream is less than 3.3% by volume.

6. The process according to any of the preceding claims, wherein the temperature of the supplied fluid stream is less than 70°C.

7. The process according to any of the preceding claims, wherein the $C_5$-$C_8$-hydrocarbons-comprising gas phase comprises 70% to 95% by volume of acid gases.

8. The process according to any of the preceding claims, wherein the laden absorption medium heated in the first heat exchanger is decompressed into the decompression zone to a pressure of >6 to 10 bar.

9. The process according to any of the preceding claims, wherein the $C_5$-$C_8$-hydrocarbons are at least partially condensed out of the $C_5$-$C_8$-hydrocarbons-comprising gas phase and the uncondensed constituents are passed into the absorption zone.

10. The process according to any of the preceding claims, wherein the $C_5$-$C_8$-hydrocarbons comprise aromatic hydrocarbons selected from benzene, toluene, ethylbenzene and xylenes.

11. The process according to any of the preceding claims, wherein the supplied fluid stream is selected from fluid streams comprising 0.5% to 10% by volume of acid gases and 10 to 5000 ppmv of $C_5$-$C_8$-hydrocarbons.

12. The process according to any of the preceding claims, wherein the supplied fluid stream is natural gas.

13. The process according to any of the preceding claims, where $\varphi$ is less than 1 and $\varphi$ is defined as

$$\varphi = \frac{\dot{m}_a \cdot c_{pa}}{\dot{m}_f \cdot c_{pf}}$$

where

$\dot{m}_a$ is the mass flow rate of the absorption medium passed into the absorption zone,
$\dot{m}_f$ is the mass flow rate of the supplied fluid stream,
$c_{pa}$ is the specific heat capacity of the absorption medium passed into the absorption zone, and
$c_{pf}$ is the specific heat capacity of the supplied fluid stream.

14. The process according to any of the preceding claims, wherein the amine is a sterically hindered amine or a tertiary amine.

15. The process according to claim 14, wherein the absorption medium further comprises a sterically unhindered primary or secondary amine.

**Revendications**

1. Procédé de séparation d'hydrocarbures en $C_5$-$C_8$ et de gaz acides à partir d'un courant fluide, selon lequel

a) le courant fluide est mis en contact dans une zone d'absorption avec un agent d'absorption, qui contient au moins une amine, un courant fluide désacidifié et un agent d'absorption chargé avec des gaz acides étant obtenus,
b) l'agent d'absorption chargé est chauffé dans un premier échangeur de chaleur, et détendu dans une zone de décompression à une pression de 5 à 10 bar, une phase gazeuse contenant des hydrocarbures en $C_5$-$C_8$ et un agent d'absorption chargé appauvri en hydrocarbures étant obtenus,
c) l'agent d'absorption chargé appauvri en hydrocarbures est conduit dans un extracteur, dans lequel les gaz acides sont au moins partiellement libérés à une pression de 1 à 2,5 bar par apport de chaleur, un agent d'absorption régénéré et un courant contenant des gaz acides étant obtenus, l'agent d'absorption chargé appauvri en hydrocarbures étant éventuellement chauffé dans un deuxième échangeur de chaleur avant l'introduction dans l'extracteur, et
d) l'agent d'absorption régénéré est recyclé dans la zone d'absorption,

lorsque le deuxième échangeur de chaleur est présent, l'agent d'absorption régénéré étant utilisé en tant que milieu chauffant dans le deuxième échangeur de chaleur, et l'agent d'absorption régénéré étant utilisé en tant que milieu chauffant dans le premier échangeur de chaleur après le passage dans le deuxième échangeur de chaleur, ou, lorsque le deuxième échangeur de chaleur n'est pas présent, l'agent d'absorption régénéré étant utilisé en tant que milieu chauffant dans le premier échangeur de chaleur,
et
suffisamment de chaleur étant transférée dans le premier échangeur de chaleur pour que la phase gazeuse contenant des hydrocarbures en $C_5$-$C_8$ contienne 50 à 97 % en volume de gaz acides.

2. Procédé selon la revendication 1, dans lequel le deuxième échangeur de chaleur est présent et dans lequel l'agent d'absorption chargé appauvri en hydrocarbures est détendu avant le chauffage dans le deuxième échangeur de chaleur dans une zone de désorption à une pression de 1 à 2,5 bar, et préchauffé par échange de chaleur direct avec le courant contenant des gaz acides.

3. Procédé selon la revendication 1 ou 2, dans lequel le courant fluide est mis en contact avec l'agent d'absorption dans la zone d'absorption à une pression de 50 à 80 bar.

4. Procédé selon l'une quelconque des revendications précédentes, dans lequel la pression partielle des gaz acides dans le courant fluide introduit est inférieure à 1 bar.

5. Procédé selon l'une quelconque des revendications précédentes, dans lequel la proportion en volume des gaz acides dans le courant fluide introduit est inférieure à 3,3 % en volume.

6. Procédé selon l'une quelconque des revendications précédentes, dans lequel la température du courant fluide introduit est inférieure à 70 °C.

7. Procédé selon l'une quelconque des revendications précédentes, dans lequel la phase gazeuse contenant des

hydrocarbures en $C_5$-$C_8$ contient 70 à 95 % en volume de gaz acides.

8.  Procédé selon l'une quelconque des revendications précédentes, dans lequel l'agent d'absorption chargé chauffé dans le premier échangeur de chaleur est détendu dans la zone de décompression à une pression de > 6 à 10 bar.

9.  Procédé selon l'une quelconque des revendications précédentes, dans lequel les hydrocarbures en $C_5$-$C_8$ sont au moins partiellement condensés à partir de la phase gazeuse contenant des hydrocarbures en $C_5$-$C_8$, et les constituants non condensés sont conduits dans la zone d'absorption.

10. Procédé selon l'une quelconque des revendications précédentes, dans lequel les hydrocarbures en $C_5$-$C_8$ comprennent des hydrocarbures aromatiques, qui sont choisis parmi le benzène, le toluène, l'éthylbenzène et les xylènes.

11. Procédé selon l'une quelconque des revendications précédentes, dans lequel le courant fluide introduit est choisi parmi les courants fluides qui contiennent 0,5 à 10 % en volume de gaz acides et 10 à 5 000 ppmv d'hydrocarbures en $C_5$-$C_8$.

12. Procédé selon l'une quelconque des revendications précédentes, dans lequel le courant fluide introduit est du gaz naturel.

13. Procédé selon l'une quelconque des revendications précédentes, dans lequel $\varphi$ est inférieur à 1, et $\varphi$ est défini par :

$$\varphi = \frac{\dot{m}_a \cdot c_{pa}}{\dot{m}_f \cdot c_{pf}}$$

$\dot{m}_a$ représentant le débit massique de l'agent d'absorption introduit dans la zone d'absorption,
$\dot{m}_f$ représentant le débit massique du courant fluide introduit,
$c_{pa}$ représentant la capacité calorifique spécifique de l'agent d'absorption introduit dans la zone d'absorption, et
$c_{pf}$ représentant la capacité calorifique spécifique du courant fluide introduit.

14. Procédé selon l'une quelconque des revendications précédentes, dans lequel l'amine est une amine à encombrement stérique ou une amine tertiaire.

15. Procédé selon la revendication 14, dans lequel l'agent d'absorption contient en outre une amine primaire ou secondaire à encombrement stérique.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6607585 B2
- US 20020012622 A1
- WO 2014199036 A
- WO 2015173263 A1

**In der Beschreibung aufgeführte Nicht-Patentliteratur**

- **BULLIN ; BROWN.** Hydrocarbons and BTEX Pickup and Control from Amine Systems. *Berichtsband zur 83. Gas Processors Association Annual Convention,* 14. Marz 2004
- **MCINTYRE et al.** Recent GPA Data Improves BTEX Predictions for Amine Sweetening Facilities. *Berichtsband zur 80. Gas Processors Association Annual Convention,* 12. Marz 2001
- Activity Coefficients in Electrolyte Solutions. **K. S. PITZER.** Ion Interaction Approach: Theory. CRC Press, 1991
- **ASPRION, N.** Nonequilibrium Rate-Based Simulation of Reactive Systems: Simulation Model, Heat Transfer, and Influence of Film Discretization. *Ind. Eng. Chem. Res.,* 2006, vol. 45 (6), 2054-2069